# EUROPEAN PATENT SPECIFICATION

(11) **EP 1 499 566 B1**
(45) Date of publication and mention of the grant of the patent: **13.01.2010**
(21) Application number: 03724270.8
(22) Date of filing: 28.04.2003
(51) Int. Cl.: C03B 37/027

(54) **METHOD AND APPARATUS FOR THERMAL TREATMENT OF A GLASS OPTICAL FIBER DURING DRAWING**
VERFAHREN UND VORRICHTUNG ZUR THERMISCHEN BEHANDLUNG EINER OPTISCHEN FASER AUS GLAS WÄHREND DES ZIEHENS
PROCEDES ET APPAREIL DE TRAITEMENT THERMIQUE D'UNE FIBRE OPTIQUE EN VERRE PENDANT L'ETIRAGE

(30) Priority: 30.04.2002 US 136697
(43) Date of publication of application: 26.01.2005
(73) Proprietor: Corning Incorporated, Corning NY 14831 (US)
(72) Inventor: FOSTER, John D, Wilmington, NC 28411 (US); HAWTOF, Daniel W., Corning, New York 14830 (US); LACY, Claude L, Painted Post, NY 14870 (US); PENG, Ying Lisa, Big Flats, NY 14814 (US); POWERS, Dale R, Painted Post, NY 14870 (US); TARPLEE, Jennifer L, Lafayette, Georgia 30728 (US); MATTHEWS, Hazel B, Wilmington, NC 28411 (US); MIECZKOWSKI, Daniel, Corning, NY 14830 (US); QUINN, Richard A, Horseheads, NY 14845 (US); WALCZAK, Wanda J, Big Flats, NY 14814 (US)
(74) Representative: Boon, Graham Anthony
(86) International application number: PCT/US2003/013047
(87) International publication number: WO 2003/093183

(56) References cited:
- EP-A- 0 464 613
- EP-A- 1 191 367
- EP-A- 1 205 449
- EP-A- 1 243 567
- EP-A- 1 281 988
- US-A1- 2001 005 993
- PATENT ABSTRACTS OF JAPAN vol. 1998, no. 12, 31 October 1998 (1998-10-31) & JP 10 194770 A (KOBE STEEL LTD), 28 July 1998 (1998-07-28)

## Description

### Field of the Invention

The present invention relates to methods and apparatus for forming optical fiber and, more particularly, to methods and apparatus for forming optical fiber having improved characteristics.

### Background of the Invention

Attenuation and sensitivity to heat (or thermal) aging may be critical attributes of optical fibers, particularly for high data rate optical fibers. In making optical fibers, it may be necessary or desirable to minimize attenuation loss in the intended window of operation for the fiber. Attenuation in an optical fiber can increase after fabrication of the fiber because of a phenomenon called "heat aging." Heat aging is the tendency of some optical fibers to increase in attenuation over time following formation of the fibers due to temperature fluctuations in the fiber's environment. Typically, the attenuation change from heat aging may be apparent at approximately 1200 nanometers (nm) with increasing effect up to about 1700 nm in a spectral attenuation plot. Furthermore, attenuation may be the result of Rayleigh scattering loss. Therefore, improved methods that reduce fiber attenuation due to heat aging and Rayleigh scattering are desired.
By way of prior art attention is directed to US 2001/0005993, on which the preamble of claim 1 is based. Attention is also directed to EP-A-046413 and WO 00/73224, which also describe methods for drawing optical fibers.

### Summary of the Invention

The present invention provides a method as defined in claim 1 for forming an optical fiber, such as a doped optical fiber. As optical fiber is drawn from an optical fiber preform at certain draw speeds and draw tensions, undesirable defects such as heat aging defects are induced into the optical fiber. Likewise, certain draw conditions produce more micro-scale density variations that lead to increased Rayleigh scattering. To combat these defects, the optical fiber is treated in accordance with the invention by maintaining the optical fiber within a treatment temperature range for a treatment time. In particular, it is desired to subject the optical fiber, as drawn, to a specified cooling rate. The phenomena of heat aging is best minimized by performing slowed cooling, preferably, while maintaining the optical fiber within a treatment tension range. Likewise, the phenomena of Rayleigh back scattering is reduced by subjecting the fiber to a specified cooling rate. Thus, advantageously, the invention herein reduces the tendency of the optical fiber to increase in attenuation over time following formation of the optical fiber, i.e., it reduces the so-called heat aging effect.
Further, the invention herein further decreases the micro-density variations that contribute to Rayleigh scattering and therefore reduces the attenuation of the optical fiber.

The glass preform, and thus the optical fiber, may be doped with a dopant selected from the group consisting of germanium, fluorine, phosphorous, chlorine or combinations thereof. In particular, certain fiber refractive index profiles are found by the inventors to be more susceptible to heat aging, for example, fibers with high amounts of dopants are found to be very susceptible. All refractive index profiles exhibit attenuation from Rayleigh scattering.

The optical fiber may be drawn from a draw furnace apparatus and passed through a treatment furnace. The treatment furnace is preferably disposed substantially immediately downstream from the draw furnace. Most preferably, the treatment furnace is attached directly to the end of the draw furnace at a location where the fiber exits therefrom such that a seal is preferably formed therebetween. This minimizes unwanted entry of air into the draw furnace.

The optical fiber may be drawn from a draw furnace such that the drawn fiber is initially surrounded by a first gas. The drawn optical fiber may be treated by passing the drawn optical fiber through a passage or chamber of a passive muffle (lacking an active heating element). The passage or chamber preferably contains a second gas having a lower thermal conductivity than the first gas. Preferably, the gases mix and are discharged out of the end of the passive muffle.

According to one embodiment of the invention, the cooling rate of the fiber within the chamber containing the second gas is controlled thereby minimizing the induced heat aging effect. It has been found that a cooling rate of between 840 °C/s and 4000 °C/s between the temperature range of between about 1100 °C to about 1500 °C is desirable for controlling heat aging of the fiber.

According to embodiments of the present invention, a draw furnace includes an exit wall and is adapted to form the optical fiber such that the optical fiber exits the draw furnace at the exit wall. A treatment furnace is secured to the draw furnace housing adjacent the exit wall and defines a passage therein. The treatment furnace is configured and positioned such that the optical fiber enters the passage as it exits the draw furnace. Preferably, the passage and all passages through which the fiber passes have a minimum dimension of 12 mm such that the gob may drop therethrough.

The draw furnace may contain a first gas, such as helium, for example. A passive muffle (see definition below) may be disposed adjacent the draw furnace and defines a passage. The passage may contain a second gas having a lower thermal conductivity than the first gas, such as argon, for example. The passive muffle may be joined to the exit wall such that ambient air cannot enter the draw furnace or the passive muffle at the joinder therebetween. The first and second gasses mix in the passive muffle and exit at an end thereof.

According to an embodiment of the invention, a method of manufacturing an optical fiber is provided that comprises the steps of providing a heated glass preform having a germainia-doped central core region and a substantially pure silica cladding region, drawing the optical fiber from a heated glass preform at a draw rate of greater than or equal to 15 m/s and at a draw tension between 25 and 200 grams, and heat treating the optical fiber in a heated treatment zone having an atmosphere containing helium flowing at greater than 10 liters/minute, and having an entry temperature of the optical fiber into the heated treatment zone is greater than 1,600 °C, an exit temperature of the optical fiber from the heated treatment zone between 1,300 °C and 1,400 °C, and the optical fiber is maintained in the heated treatment zone for a total residence time of greater than 0.07 and less than 0.15 seconds while controlling an average cooling rate of the optical fiber in the heated treatment zone to be greater than 2,000 °C/s and less than 3,500 °C/s.

### Brief Description of the Drawings

The accompanying drawings, which are incorporated in and constitute a part of the specification, illustrate embodiments of the invention and, together with the description, serve to explain principles of the invention.

**Fig. 1** is a block diagram illustrating methods, according to the present invention, for manufacturing optical fiber.

**Fig. 2** is a schematic, cross-sectional side view of an optical fiber forming apparatus according to the present invention.

**Fig. 3** is a schematic, cross-sectional side view of another optical fiber forming apparatus according to the present invention.

**Fig. 4** is a schematic, cross-sectional side view of another optical fiber forming apparatus according to the present invention.

**Figs. 5-7** are refractive index plots of delta (%) versus radius (µm) of several optical fibers formed according to the present invention.

**Fig. 8** is a block diagram of an optical fiber drawing and treating method according to the present invention.

**Fig. 9** is a graphic depiction of a refractive index profile of an optical fiber that may be heat treated according to the present invention.

**Fig. 10** is a graphic depiction of a cooling rate profile of a method according to the present invention.

**Fig. 11** is a schematic, cross-sectional side view of an optical fiber drawing and heat treating apparatus according to the present invention.

**Fig. 12** is a schematic, cross-sectional side view of another optical fiber drawing and heat treating apparatus according to the present invention.

### Detailed Description of the Preferred Embodiments

The present invention now will be described more fully hereinafter with reference to the accompanying drawings, in which preferred embodiments of the invention are shown. In the figures, layers, components or regions may be exaggerated for clarity.

The present invention includes methods for treating and for forming and treating drawn optical fibers to reduce the heat aging sensitivity (defects) of the treated optical fibers. As used herein, "heat aging" means a defect in the optical fiber that causes attenuation in the fiber to increase over time subsequent to the initial formation of the fiber. As will be better understood from the description that follows, the methods and apparatus of the present invention may allow for relatively high speed, high tension formation of drawn, doped, optical glass fibers having reduced heat aging sensitivity as compared to like fibers which have been drawn at such speeds and tensions but without the treatment step of the present invention.

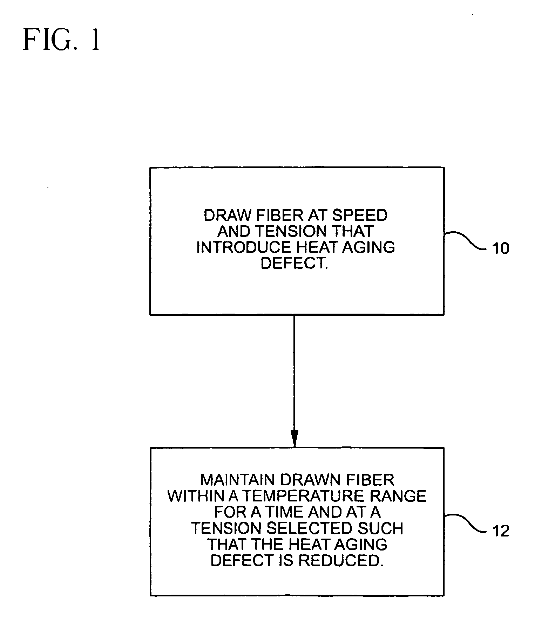

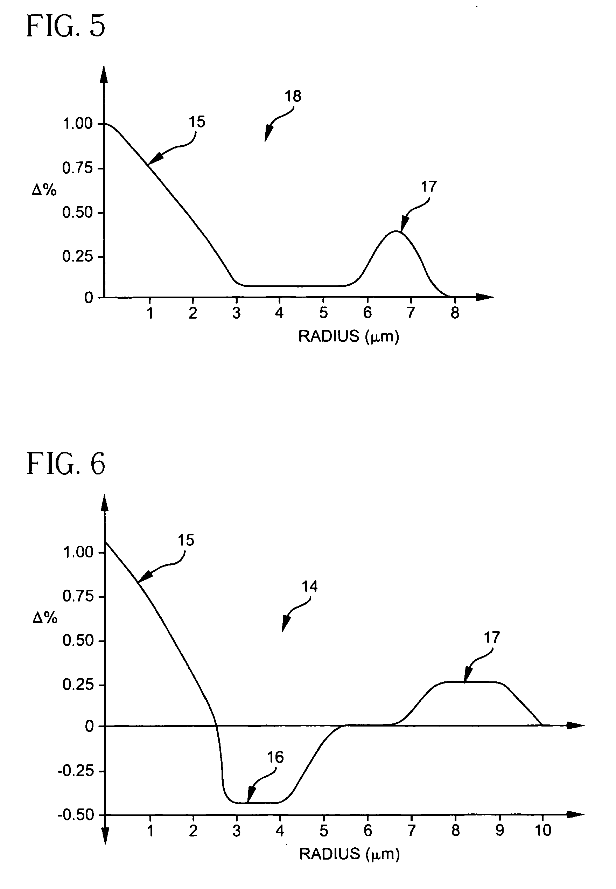

With reference to **Fig. 1**, in accordance with method embodiments of the present invention, an optical fiber is drawn, for example, from a suitable doped glass blank or preform, at a selected speed **S_{D}** and a selected tension **F_{D}** that is sufficient to introduce a heat aging defect in the drawn optical fiber (**Block 10**). Either or both of the core and the cladding (if any) of the drawn fiber may be doped. Typically, the core is doped and may include multiple segments therein, i.e., include a segmented core structure. **Figs. 5-7** illustrate delta (%) versus radius (µm) for several fiber refractive index profiles that appear to be sensitive to heat aging and which benefit from being formed and treated in accordance with the present invention. The draw speed **S_{D}** is preferably maintained between about 2 m/s and 35 m/s during draw. More preferably, the draw speed S_{D} is between about 6 m/s and 25 m/s. Draw speeds S_{D} of greater than about 6 m/s induce some defect for most Dispersion Compensating (DC) fibers, for example, although, in some fibers, the defect may occur for draw speeds as low as 2 m/s or more. The draw tension **F_{D}** is preferably in the range of between about 25 grams and 200 grams, and more preferably, in the range of between about 90 grams and 200 grams. It has been found that heat aging is typically induced in doped fibers, such as DC fibers, that are drawn at a draw speed of greater than about 6 m/s while being maintained at a draw tension of greater than 90 grams.

It should be noted that in some cases, it is possible to decrease the heat aging effect by operating with different draw conditions, such as operating at a lower draw speed or at a higher draw tension. However, some of these conditions are undesirable for either economic reasons or because the fiber attributes would be undesirable. The present invention allows the production of optical fiber more economically, and with better attributes such as strength, attenuation and uniformity while still producing an optical fiber with less attenuation increase due to heat aging in comparison to untreated optical fibers.

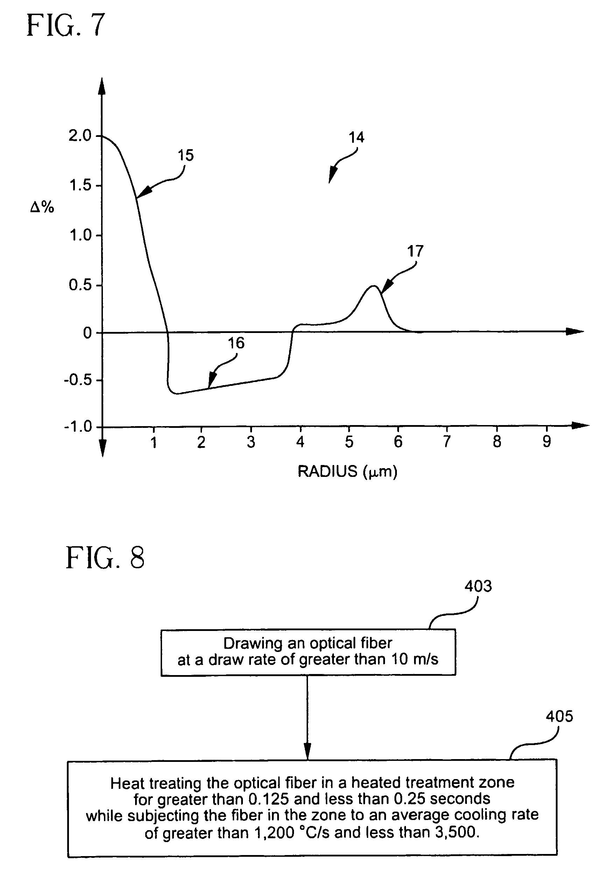

As is shown in **Figs. 6** and 7, such DC fibers 14 typically have a core including a central core 15, a moat 16 and a ring 17. The central core 15 and ring 16 typically include germania doping, while the moat typically includes fluorine doping. The delta values for the core 15 are typically greater than 0.8% and preferably range between about 0.8 to 3.0%, whereas the deltas of the rings 17 are typically greater than 0.2% and preferably range from between about 0.2 to 1.0% for such DC fibers 14. The deltas of the moats 16 are typically less than -0.2% and preferably range from between about -0.2 to -1.0%. Other fiber types, such as fiber 18 shown in **Fig. 5** are also sensitive to heat aging and may include a core 15 and a ring 17.

The heat aging defect induced in the foregoing manner may be detected and measured by the following heat aging test method. First, the drawn fiber is cooled to about 20 °C and thereafter the fiber is heat cycled. The fiber is heat cycled by maintaining the drawn fiber at 200 °C for 20 hours and then cooling the fiber back to 20 °C. The attenuation of the drawn fiber is thereafter measured (e.g., using an optical bench such as a PK 2500 spectral bench available from Photon Kinetics or an Optical Time Domain Reflectometer (OTDR) apparatus) at the wavelength of interest (typically between 1000 nm - 1700 nm). The fiber, when drawn **(Block 10)** and measured in this manner, exhibits an attenuation in the wavelength of interest that is increased by at least 0.03 dB/km to 0.25 dB/km or more in the heat cycled fiber as compared to the cooled fiber prior to heat cycling (un-heat aged fiber) when measured at 1550 nm. Thus, it should be recognized that it is highly desirable to reduce the heat aging effect by treating the fiber in accordance with the invention thereby minimizing any undesirable increase in attenuation.

In order to combat the aforementioned heat aging defect, the temperature **T_{T}** of the drawn fiber is maintained within a selected temperature range **T₁** to **T₂** for a selected time **t_{T}** and preferably at a selected tension **F_{T} (Block 12).** Typically, the draw tension **F_{D}** is the same as the treatment tension **F_{T}.** In this manner, the heat aging defect present in the drawn fiber prior to the treatment step may be reduced significantly or may even be effectively eliminated.

The foregoing method may be better appreciated from the more detailed description that follows. Suitable and preferred materials and parameters for executing the foregoing steps are set forth below. Additionally, apparatus according to the present invention for conducting the foregoing and other methods are described hereinbelow.

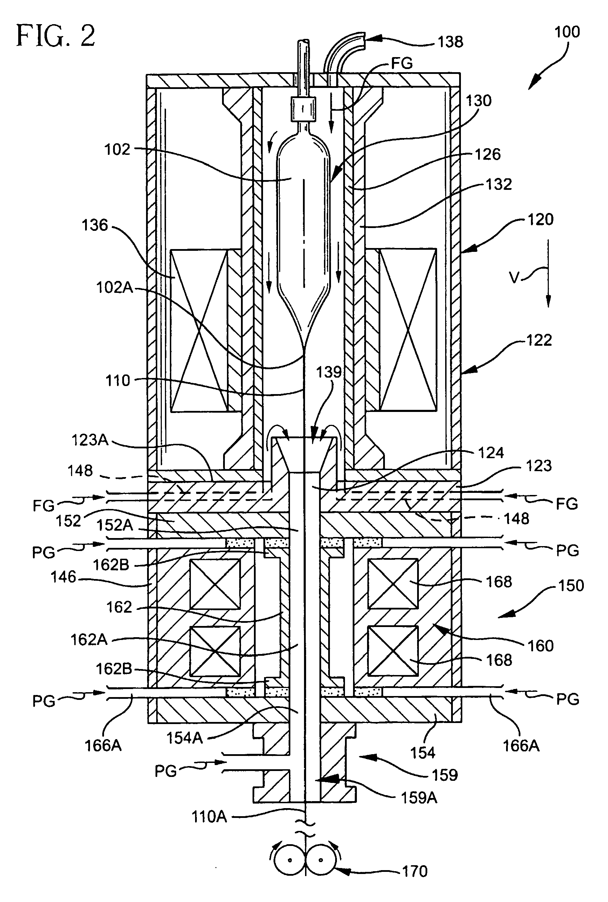

With reference to **Fig. 2****,** an optical fiber forming apparatus **100** according to embodiments of the present invention is shown therein. The apparatus **100** includes, generally, a draw furnace **120,** a treatment furnace **150** and a tensioning station **170,** shown as a tractor assembly, for applying tension to the drawn fiber. The apparatus **100** may be used to form a treated optical fiber **110A** from a doped glass preform **102,** for example. More particularly, the draw furnace **120** may be used to form a drawn optical fiber strand **110** (hereinafter "the drawn fiber **110")** and the treatment furnace **150** may thereafter be used to treat the drawn fiber **110** to form a treated optical fiber strand **110A** (hereinafter "the treated fiber **110A").** The treated optical fiber **110A** being treated so as to minimize the heat aging effect. The tensioning station **170** serves to control and maintain the desired tension in the fiber **110, 110A.** Additional conventional process steps may be included, such as non-contact diameter measurement apparatus, further fiber cooling apparatus, fiber coating and curing apparatus for applying and curing the primary and secondary fiber coatings, and spool winding apparatus. Such additional process steps are conventional and not shown for clarity. Additionally, an iris or moveable door mechanism may be employed at the bottom of the treatment furnace to minimize the amount of air entry into the treatment furnace.

The glass preform **102** is preferably formed of a doped silica glass. The preform **102** may be formed such that either the core or the cladding (if present) of the drawn fiber is doped, or such that both the core and the cladding of the drawn fiber are doped. The silica glass may be doped with one or more of germanium, fluorine, phosphorous or chlorine, or combinations thereof, for example. Other suitable dopants may be used as well. Germanium doped fibers, such as shown in **Figs. 5-7****,** were found by the inventors to exhibit heat aging under most manufacturing conditions. Methods and apparatus for forming the preform **102** are well known and are readily appreciated by those of skill in the art. Such methods include IVD, VAD, MCVD, OVD, PCVD and the like.

The draw furnace **120** preferably includes a housing **122** surrounding the preform and having a flange **123** secured on the lower end thereof, the flange **123** serving as the exit wall of the draw furnace **120.** An axial opening **124** is defined in the flange **123** through which the fiber **110** passes and through which the previously dropped glass gob may pass. An annular sleeve-like susceptor **126** (which may be, for example, formed of graphite) extends through the draw furnace **120** and defines a passage **130** therein. The passage **130** includes an upper section adapted to receive and hold the optical fiber preform **102** and a lower section through which the drawn fiber **110** passes as glass is melted and drawn off from the preform **102.** The gob, formed at the initiation of drawing also passes through this section. The lower section of the passage **130** communicates with the opening **124.** A hollow exit cone **139** is preferably positioned over the opening **124.** An annular insulator **132** and an induction coil(s) **136** surround the susceptor **126.**

A suitable inert forming gas **FG,** most preferably helium, is introduced into the passage **130** at about 1 atmosphere of pressure through a suitable flow inlet **138** and flows downwardly and out of the draw furnace **120** through the opening **124.** The draw furnace **120,** as described and illustrated, is merely exemplary of suitable draw furnaces and it will be appreciated by those of skill in the art that draw furnaces of other designs and constructions, for example, using other types of heating mechanisms, susceptors and insulation, etc. may be employed.

With reference again to **Fig. 2****,** opposed flow passages **148** extend radially through the flange 123 and terminate in openings at the upper surface **123A** thereof. The passages **148** also extend vertically through the flange **123** and terminate adjacent the outer periphery of the cone **139.** Forming gas **FG** is additionally fed through the openings of the passages **148** and flows up around the cone **139** and back down through the center opening of the cone **139.**
The forming gas **FG** may be, for example, helium gas (He), nitrogen gas (N₂), Argon gas (Ar), or any other suitable inert gas. Most preferably, the forming gas **FG** is helium gas.

The treatment furnace **150** is positioned below, and preferably interconnected to, the flange **123.** The treatment furnace **150** includes a heating unit **160** with one or more annular heating elements **168** therein. The heating element may be, for example, an electrical resistance or an induction heating coil. Openings **152A** and **154A** are defined in the upper and lower ends of treatment furnace **152** and **154,** respectively. The openings along the draw path are sufficiently large to enable the glass gob to drop through upon initiation of draw.
The ends **152, 154** and the sleeve **146** serve as the housing for the treatment furnace **150.** However, it will be appreciated that other housing configurations and components may be employed. The treatment furnace **150** is preferably secured to flange **123** of the draw furnace **120** by suitable means such as fasteners.

A generally cylindrical quartz spool **162** is disposed in the heating unit **160.** The spool **162** defines a passage **162A** and has a pair of quartz flanges **162B** located on opposed ends thereof. The flanges **162B** may be, for example, flame welded to the ends of a quartz tube to form the spool **162.** A first graphite gasket **164** is interposed between the lower surface of the flange **152** and the upper flange **162B.** A second graphite gasket **164** is interposed between the lower flange **154** and the lower flange **162B.**

Gas rings **166** having feed passages **166A** surround the graphite gaskets 164 and have small perforations adapted to direct a purge gas **PG** toward the graphite gaskets **164.** The purge gas **PG** is provided to reduce or prevent exposure of the graphite gaskets **164** to air and may be, for example, helium (He), Argon (Ar), nitrogen (N₂), or any other suitable inert gas.

A purge gas member **159** is affixed to the lower surface of the flange **154.** A purge gas **PG** is pumped into the purge tube passage **159A** to prevent air from entering the passage **162A** from below.

The passage **162A** of the quartz tube **162** preferably has a diameter dimension **D** of greater than 12 mm at all places along its length, and preferably between about 12 mm and 80 mm, and more preferably between 45 mm and 80 mm to allow the glass gob formed at the initiation of drawing to readily drop therethrough. The length **L** of the treatment zone of the treatment furnace **150** extending between the upper surface of the flange **152** and the lower surface of the flange **154** is preferably between about 0.2 m and 3 m, and more preferably between 0.5 m and 1.0 m. The preferred length **L** will depend on the draw speed of the fiber **110** and the preferred ranges above are for a draw speed of from about 2 m/s to 35 m/s, and more preferably between 6 m/s and 25 m/s.

The tensioning station **170** may be any suitable device for controlling the tension in the drawn fiber **110.** Preferably, the tensioning device **170** includes a microprocessor which continuously receives input from one or more fiber tension and/or diameter sensors (not shown) and is operative to apply the tension of the fiber **110** as needed. In a preferred embodiment, the tension commanded is based upon controlling the diameter to equal a set diameter stored in memory.

The apparatus **100** may be used in the following manner to manufacture a treated optical fiber **110A.** The furnace induction coil **136** is operated to heat the tip **102A** of the optical fiber preform **102** to a preselected draw temperature **T_{D}.** Preferably, the draw temperature **T_{D}** is in the range of between about 1800 °C and 2200 °C. More preferably, the draw temperature **T_{D}** is in the range of between about 1900 °C and 2050 °C. The preform tip **102A** is maintained at the selected draw temperature **T_{D}** so that the drawn fiber **110** is continuously drawn off of the tip **102A** in a draw direction **V,** which is preferably vertically downward. The fiber **110** is maintained at a calculated draw tension **F_{D}** as described above by the tensioning device **170** or other suitable tension applying apparatus such that the set diameter (typically 125 µm) of the fiber is met within a predefined tolerance band. The forming gas **FG** (e.g., helium) is pumped from the upper inlet **138** and through the passages **130,124,152A, 162A, 154A** and out through the purge tube passage **159A.**

In this way, the drawn fiber **110** is drawn off from the preform **102** at a selected draw speed **S_{D}** as described above. The selected draw temperature **T_{D}** and the draw tension **F_{D}** used to manufacture the fiber causes the fiber **110** to have the undesirable heat aging defect. That is, as a result of the draw temperature **T_{D}** and the draw tension **F_{D}** used to draw the fiber **110** at the desired speed **S_{D}**, the drawn fiber **110** will exhibit a sensitivity to heat aging.

Because the treatment device **150** is secured substantially immediately adjacent the opening **124** of the draw furnace **120,** the drawn fiber **110** is not quenched by cooler ambient air as the fiber **110** exits the draw furnace **120.** Further, the possibility of oxygen getting into the draw furnace is reduced, thereby minimizing possible degradation of the graphite susceptor **126.** In the present invention, the drawn fiber **110** passes through the passage **124** and is substantially immediately heated by the heating unit **160.** The heating unit **160** maintains the temperature of the fiber **110** at a treatment temperature **T_{T}** within a selected temperature range **T₁** to **T₂.** The lower temperature **T₁** is preferably between about 1100 °C and 1400 °C and the upper temperature **T₂** is preferably between about 1200 °C and 1800 °C. More preferably, the lower temperature **T₁** is between about 1200 °C and 1350 °C and the upper temperature **T₂** is between about 1300 °C and 1450 °C. Also, as the fiber **110** passes through the passage **162A,** the fiber **110** is maintained at a selected treatment tension **F_{T}.** Preferably, the treatment tension **F_{T}** is between about 25 and 200 grams. More preferably, the treatment tension **F_{T}** is between about 90 and 170 grams. The length **L** of the treatment zone is selected such that the drawn fiber **110** is maintained within the selected temperature range **T₁** to **T₂** for a selected resident treatment time t_{T}. The treated fiber **110A** exits the treatment furnace **150** through the bottom opening **154A** and preferably continues downwardly to additional processing stations (additional cooling, measurement, coating, etc.).

The above-described treatment temperature **T_{T},** treatment tension **F_{T}** and resident time t_{T} are cooperatively selected to reduce or eliminate the heat aging defect or sensitivity in the fiber **110.** Accordingly, the treated fiber **110A** so formed will have a lesser heat aging defect or sensitivity as compared to an optical fiber **110** which has not been suitably treated in the manner described above (i.e., using the step **of Block 12 in** **Fig. 1****),** but which has otherwise been formed in the same manner. The foregoing methods and apparatus thus allow for relatively high speed drawing of optical fiber with reduced heat aging defects as compared to untreated fibers drawn at the same speed.

Preferably, the draw furnace **120** and the treatment furnace **150** are relatively configured and secured and the gases are supplied such that they provide an air-tight path from the passage **130** to the opening **159A.**

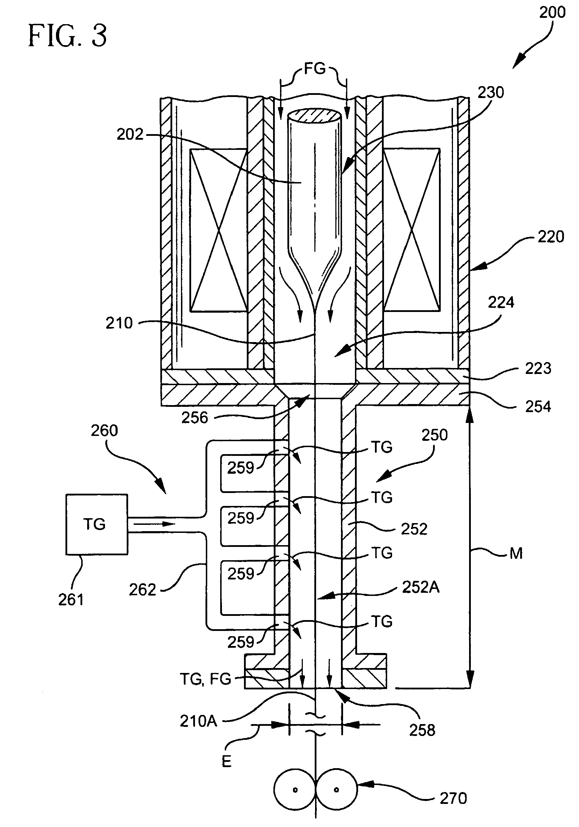

With reference to **Fig. 3****,** an optical fiber forming apparatus **200** according to further embodiments of the present invention is shown. The apparatus **200** includes a draw furnace **220** corresponding to the draw furnace **120.** In place of the treatment furnace **150,** the apparatus **200** includes a passive treatment assembly **250.** The assembly **250** is "passive" in that it does not include a heating device corresponding to the heating module **160** in any portion thereof. In other words, the fiber is cooled at a controlled rate without the aid of an active heating module.

The apparatus **200** includes a draw furnace **220** and a tensioning station **270** corresponding to the draw furnace **120** and the tensioning station **170,** respectively. Preferably, the draw furnace **220** is of the type having a graphite susceptor. The passive treatment assembly **250** includes a tubular muffle **252** having an upper flange **254.** The muffle **252** is affixed directly to the lower end wall **223** of the furnace **220** by bolts or other fasteners (not shown for clarity) that extend through holes in the flange **254** and engage the end wall **223.** The muffle **252** is preferably formed of metal, such as stainless steel or aluminum.

The muffle **252** defines an upper opening **256** at a first end, an opposing lower opening **258** at a second end and a passage **252A** extending therebetween. Preferably, the diameter **E** of the passage **252A** is substantially uniform and greater than 12 mm, more preferably between about 12 mm and 80 mm, and most preferably between 45 and 80 mm. The upper opening **256** communicates with the lower opening **224** of the draw furnace **220.** A plurality of axially spaced supply ports **259** are formed in the side wall of the muffle **252** and communicate with the passage **252A** along its length.

A treatment gas flow system **260** is operatively and fluidly connected to the muffle **252.** The treatment gas flow system **260** includes a treatment gas supply **261** that is fluidly and operatively connected to each of the ports **259** by a manifold or conduits **262.** The treatment gas supply station **261** includes a supply of a selected treatment gas **TG,** and a pump or the like operative to pressurize the treatment gas **TG** sufficiently to force it through the conduits **262** and the feed ports **259** and into the passage **252A.** The treatment gas supply station **261** may optionally include a heating unit to heat the treatment gas **TG.** However, preferably the treatment gas is supplied at 20°C.

The apparatus **200** may be used in the following manner to form a treated optical fiber **210A.** Using the draw furnace **220** and the tensioning device **270,** a fiber **210** corresponding to the fiber **110** is drawn from a preform **202** corresponding to the preform **102** in the manner described above with regard to the apparatus **100,** at a draw temperature and a draw tension sufficient to introduce a heat aging defect. As the fiber **110** is being drawn, a forming gas **FG** is introduced through an inlet identical to that shown in **Fig. 2****.** The forming gas flows through the passage **230** about the preform **202** and the fiber **210,** through the opening **224** in the furnace end wall **223** and into the first end of the passage **252A** through the opening **256.**

The drawn fiber **210** enters the passage **252A** of the muffle **252** immediately upon exiting the furnace **220.** As the fiber **210** passes through the passage **252A,** the treatment gas **TG** is pumped from the treatment gas supply **261** into the passage **252A** through the at least two axially spaced supply ports **259** as indicated by the arrows in **Fig. 3****.** The treatment gas flows into the passage **252A** at the various stages and mixes with the forming gas **FG.** Preferably, the treatment gas **TG** has a thermal conductivity k of less than about 120 x 10⁻⁶ cal/(sec) (cm)² (°C/cm), and more preferably less than about 65 x 10⁻⁶ cal/(sec) (cm)² (°C/cm) at 25°C. The mixture of the treatment gas **TG** and the forming gas **FG** flows through the passage **252A** and exits through the second end opening **258.**

The treatment gas **TG** has a lower thermal conductivity than the forming gas **FG.** Preferably, the thermal conductivity of the treatment gas **TG** is less than 40% of, and more preferably less than 20% of, the thermal conductivity of the forming gas **FG.** The treatment gas **TG** is preferably nitrogen or argon. More preferably, the treatment gas **TG** is argon. The forming gas **FG** is preferably helium.

As the drawn fiber **210** is drawn through passage **252A,** the drawn fiber **210** is maintained at the selected treatment tension **F_{T},** and the treatment temperature **T_{T}** of the fiber **210** while in the passage **252A** is maintained in the selected temperature range **T₁-T₂** for the selected residence time t_{T} as discussed above with respect to the apparatus **100.** In the manner described above with respect to the apparatus **100,** the selected treatment tension **F_{T},** temperature range **T₁** to **T₂** and residence time **t_{T}** are cooperatively selected such that they reduce or eliminate the heat aging defect in the fiber **210,** thereby providing a treated fiber **210A** corresponding to the treated fiber **110A.** In the case of the apparatus **200,** the length **M** of the passage **252A** of the passive treatment device **250** is selected to provide the desired residence time **t_{T}** in view of the draw speed of the fiber **210.**

The lower thermal conductivity of the treatment gas **TG** slows heat transfer from or cooling of the drawn fiber **210** so that the fiber **210** is maintained in the selected temperature range **T₁- T₂** while in the passage **252A.** The flow rate, turbulence and temperature of the treatment gas **TG** may be selected as appropriate to provide the desired cooling rate. In accordance with this embodiment of the invention, the desired cooling rate in the treatment furnace **250** is between 2500 °C/sec and 3500 °C/sec in a temperature range of between 1200 °C to 1500 °C.

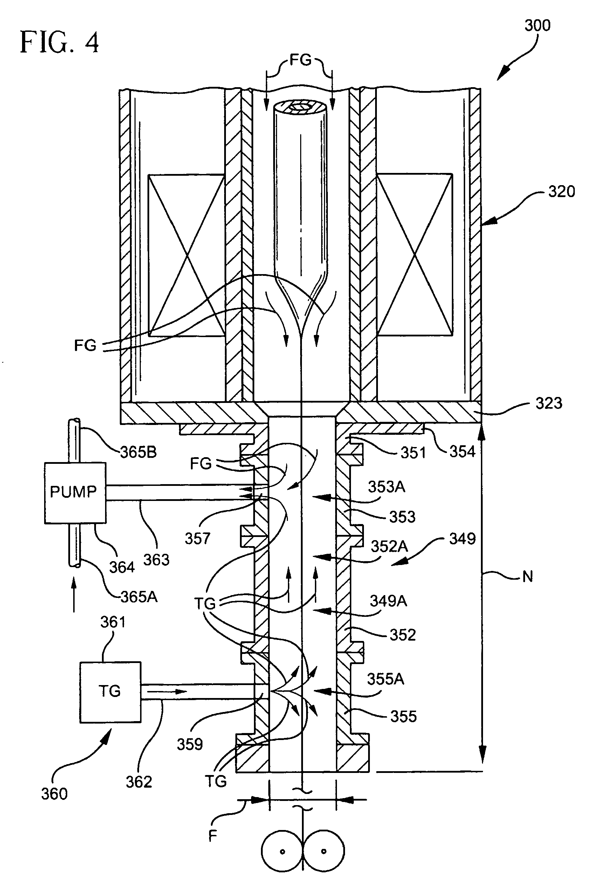

With reference to **Fig. 4****,** an optical fiber forming apparatus **300** according to further embodiments of the present invention is shown therein. The apparatus **300** includes a draw furnace **320** of the type having a graphite susceptor. The apparatus **300** corresponds to the apparatus **200** except as follows and may be used in the same manner except as follows.

The muffle **250** is replaced with a multi-piece muffle assembly **349** defining a continuous passage **349A.** The muffle assembly **349** includes an annular upper muffle section **351** including a flange **354** for securing the muffle assembly **349** to the exit wall **323** of the draw furnace **320.** A second annular muffle section **353** is affixed to the lower end of the muffle section **351** and defines a passage **353A.** An outlet port **357** is formed in the side of the muffle **353** and communicates with the passage **353A.** A third annular muffle section **352** is affixed to the lower end of the muffle section **353** and defines a passage **352A.** A fourth annular muffle section **355** is fixed to the lower end of the muffle section **352** and defines a passage **355A.** A feed port **359** is formed in the muffle **355** and communicates with the passage **355A.** The diameter **F** of the passage **349A** is preferably substantially uniform and preferably greater than 12 mm, more preferably between about 12 mm and 80 mm, and most preferably between 45 and 80 mm and is preferably of substantially constant diameter along its length **N.** The length **N** of the muffle assembly **349** is preferably between about 0.2 m and 1.0 m.

Additionally, in the apparatus **300,** the treatment gas flow apparatus **260** is replaced with a treatment gas flow system **360.** The flow system **360** includes a treatment gas supply **361** corresponding to the treatment gas supply station **261.** The treatment gas supply station **361** is fluidly connected to the feed port **359** by a conduit **362.** The flow system **360** further includes a pump **364** fluidly connected to the outlet port **357** by a conduit **363.** The pump **364** is preferably a Venturi pump that is provided with a supply of compressed air from inlet **365A** as illustrated.

In use, the treatment gas **TG** is introduced from the treatment gas supply **361** through the conduit **362** and the feed port **359** into the passage **355A.** The pump **364** provides a sufficient vacuum and resultantly draws at least a portion of the treatment gas **TG** up through the passages **352A** and **353A,** through the outlet port **357** and the conduit **363,** and out through an outlet **365B.** Simultaneously, the vacuum generated by the pump **364** draws the forming gas **FG** from the draw furnace **320** through the passage **353A,** the outlet port **357** and the conduit **363,** and out through the pump outlet **365B** as well. This is beneficial, because it prevents the mixing of the two gasses in the lower end of the passage **349A.**

### Example 1

Using a draw furnace, a negative dispersion germania-doped optical fiber having a profile including a core and a ring as shown in **Fig. 5** was drawn from a doped preform at a rate of 14 meters per second (m/s) with a tension of 150 grams. Thereafter, the fiber was cooled to 20°C and then subjected to the heat aging test as described above. Following this test, the measured attenuation increase in the untreated fiber at 1550 nm was 0.0830 dB/km.

A second fiber was drawn from an identical preform in the same manner as described just above. The second fiber was passed through a treatment apparatus in accordance with the invention as described in **Fig. 4** immediately after the fiber exited the draw furnace. The length and operating parameters of the treatment furnace were selected such that the temperature of the second fiber was maintained at a desired temperature for a desired amount of time. In particular, the length M of passage was about 0.615 m. Thus, the fiber was maintained at a temperature of from about 1700 °C to about 1525 °C for a residence time of about 0.044 seconds while the tension in the fiber was maintained at 150 grams. The forming gas **FG** was helium and the treatment gas **TG** was argon at 23°C. Thereafter, the fiber was cooled to 20°C and then subjected to the same heat aging testing as heretofore described.
The measured attenuation in the fiber subjected to the treatment increased only 0.027 dB/km at 1550 nm. Thus, for this fiber type as shown in **Fig. 5****,** a 67% reduction in the heat aging was obtained by subjecting the fiber to the additional treatment step in accordance with the invention.

### Example 2

Using a draw furnace, a negative dispersion germania and fluorine doped optical fiber having a profile including a core, moat and a ring as shown in **Fig. 6** was drawn from a preform at a rate of 14 meters per second (m/s) with a tension of 150 grams. Thereafter, the fiber was cooled to 20°C and then subjected to the heat aging test as described above. Then testing revealed that the measured attenuation increase in the fiber at 1550 nm was 0.285 dB/km following heating for 20 hours at 200°C.

A second fiber was drawn from an identical preform in the same manner as described just above. The second fiber was subjected to the treatment apparatus and method in accordance with the invention described in **Fig. 4** herein immediately after the fiber exited the draw furnace. The length and operating parameters of the treatment furnace were selected such that the temperature of the second fiber was maintained at the conditions identified in Example 1. Thereafter, the fiber was cooled to 20°C and then subjected to the same heat aging testing as heretofore described. The measured attenuation increase in the fiber subjected to the treatment was only about 0.033 dB/km at 1550 nm. Thus, for this fiber type, a dispersion compensating fiber having a positive delta core, a negative delta moat and a positive delta ring, it should be recognized that a dramatic reduction (88%) in the heat aging was obtained by subjecting the fiber to the additional treatment step. The cooling rate applied in the previous two examples was approximately 3980 °C/s.

### Example 3

Using a draw furnace, a germania and fluorine doped silica glass optical fiber having a negative dispersion and dispersion slope and a profile as shown in **Fig. 5** was drawn from a preform at a rate of 14 meters per second (m/s) with a tension of 150 grams. A helium forming gas was used in the draw furnace. Thereafter, the fiber was cooled to 20°C and then subjected to the heat aging testing where the fiber is maintained at 200 °C for 20 hours. At the end of this period, the fiber was cooled to 20 °C, the measured attenuation increase in the fiber at 1550 nm was 0.420 dB/km.

A second fiber was drawn in the same manner as described just above from an identical fiber. The second fiber was passed through a heated treatment apparatus as shown in **Fig. 2** immediately after the fiber exited the draw furnace. The length of the muffle was 0.4 m and its inside diameter was 60 mm and the temperature was selected such that the temperature of the second fiber was maintained at from about 1700°C to about 1525°C for a residence time of about 0.028 seconds while the tension in the fiber was maintained at 150 grams. The second fiber was heat aging tested as before and the measured attenuation increase in the fiber at 1550 nm was 0.0015 dB/km. Thus, the present invention resulted in a 96% reduction in heat aging.

Other actual experimental examples are illustrated in Table 1. Listed are the Example Number (Ex.), the attenuation change with (With Treat) and without (W/O Treat) the heat aging reduction treatment, the % reduction in heat aging when treated (% Red.), the fiber profile (Prof.) of the fiber treated, the dopants present in the treated fiber (Dop.), the draw tension used (Tens.), the draw speed used (Draw Speed), the apparatus used (App.), and whether the apparatus included a heater (Heater).

**Table 1** illustrates the results for the various examples.

| **Ex.** | **Gas** | **W/O Treat dB/km** | **With Treat dB/km** | **% Red.** | **Prof.** | **Dop.** | **Tens. grams** | **Draw Speed m/s** | **App.** | **Heater** |
|---|---|---|---|---|---|---|---|---|---|---|
| 1 | Ar | 0.083 | 0.027 | 67% | Fig. 5 | Ge | 150 | 14 | Fig. 4 | No |
| 2 | Ar | 0.285 | 0.033 | 88% | Fig. 6 | Ge/F | 150 | 14 | Fig. 4 | No |
| 3 | He | 0.420 | 0.0015 | 96% | Fig.7 | Ge/F | 150 | 14 | Fig.2 | Yes |
| 4 | He | 0.032 | 0.0155 | 52% | Fig. 5 | Ge | 150 | 14 | Fig. 2 | Yes |
| 5 | He | 0.191 | 0.0175 | 91% | Fig.6 | Ge/F | 150 | 14 | Fig.2 | Yes |
| 6 | He | 0.560 | 0.050 | 91% | Fig. 7 | Ge/F | 150 | 20 | Fig. 2 | Yes |
| 7 | Ar | 0.141 | 0.066 | 53% | Fig. 5 | Ge | 150 | 20 | Fig. 3 | No |
| 8 | Ar | 0.135 | 0.054 | 60% | Fig. 5 | Ge | 150 | 17.5 | Fig. 3 | No |
| 9 | Ar | 0.108 | 0.059 | 45% | Fig. 5 | Ge | 150 | 15.0 | Fig. 3 | No |
| 10 | Ar | 0.082 | 0.052 | 36% | Fig. 5 | Ge | 150 | 12.5 | Fig. 3 | No |
| 11 | Ar | 0.649 | 0.294 | 55% | Fig. 6 | Ge/F | 90 | 15 | Fig. 4 | No |
| 12 | Ar | 0.458 | 0.101 | 78% | Fig. 6 | Ge/F | 150 | 20 | Fig. 4 | No |

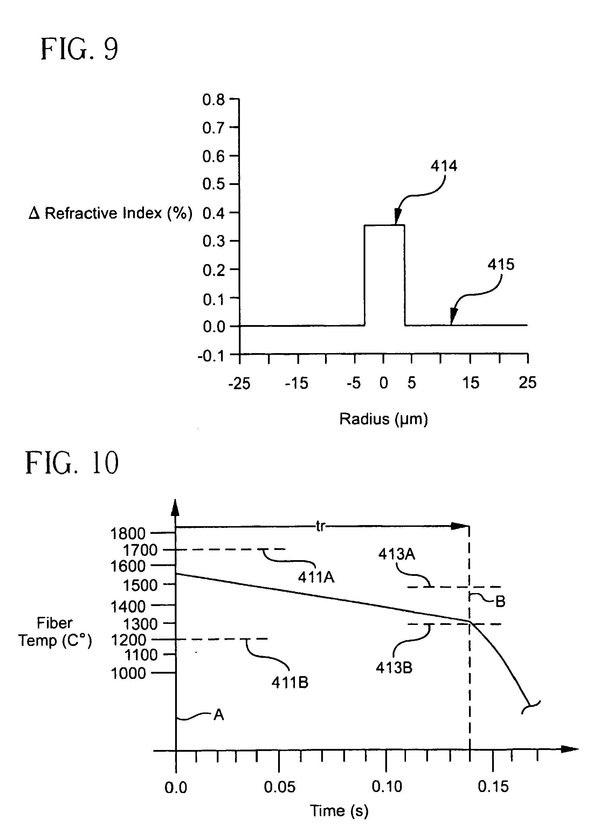

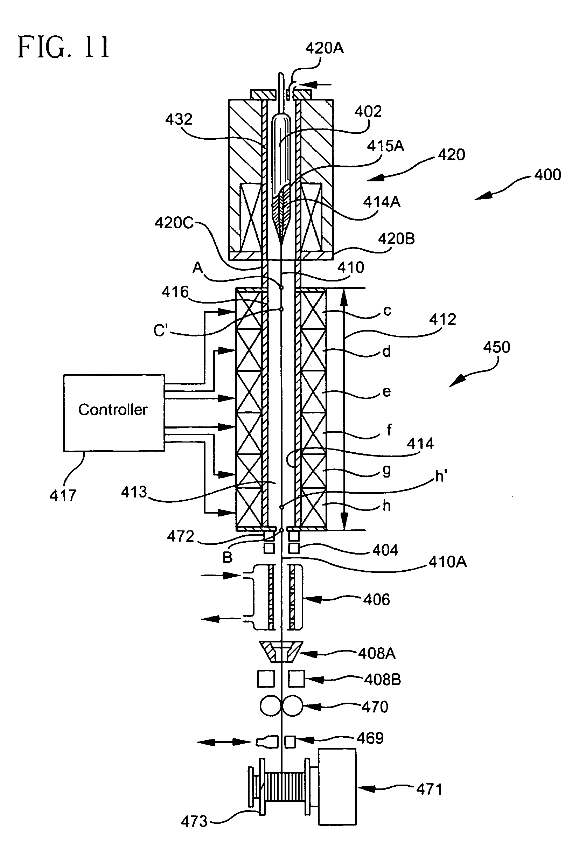

Another embodiment of the invention is shown and described with reference to **Figs. 8-11****.** In accordance with this embodiment, a method for high speed drawing (at draw rates of greater than or equal to 10 m/s) and heat treatment of optical fiber is provided. As best shown in **Fig.11****,** a treated optical fiber is produced at high speed from an optical fiber forming apparatus **400** according to embodiments of the present invention. The apparatus **400** includes, generally, a draw furnace **420,** followed downstream by, and preferably mechanically coupled to, a heat treatment furnace **450.** The apparatus **400** may be used to form a heat treated optical fiber **410A** by drawing it at high speed from a heated glass supply **402,** such as a optical fiber preform for example, and then subjecting the drawn fiber to a defined temperature profile (a time-temperature profile, for example, as shown in **Fig. 10****)** such that attenuation of the fiber due to Rayleigh Scattering is reduced. The method described herein is particularly effective at producing, at high speed, germanium-doped central core optical fibers having reduced attenuation due to reduced Rayleigh scattering loss. In particular, the method is well adapted to providing low attenuation (less than or equal to 0.187 dB/km at 1550 nm and/or less than or equal to 0.327 at 1310 nm) in optical fibers having germanium-doped central cores. One such fiber is a single mode step index fiber example as shown in **Fig. 9** having a germanium-doped central core **414** and a substantially pure silica cladding **415** surrounding and abutting the core.

More particularly, the draw furnace **420** may be used to form a drawn optical fiber strand **410** (hereinafter "the drawn fiber **410")** at high speed and the treatment furnace **450** may thereafter be used to heat treat the drawn fiber **410,** thus formed at high speed, to produce a treated optical fiber strand **410A** (hereinafter "the treated fiber **410A").** The treated optical fiber **410A** is heat treated to preferably reduce the attenuation due to Rayleigh back scattering over an operating wavelength (with attenuation, for example, of less than or equal to 0.327 dB/km at 1310 nm, and preferably less than or equal to 0.187 dB/km at 1550 nm).

As should be recognized, additional apparatus may be included for performing subsequent conventional process steps after the heat treating step. For example, a non-contact diameter measurement apparatus **404** for measuring a representative diameter of the fiber may follow after the heat treatment step. Further, a fiber cooling apparatus **406** may be provided for even further cooling the treated fiber **410A** to a sufficiently low temperature (for example, less than about 100°C) to allow a protective polymer coating(s) to be applied to the outer periphery of the treated fiber **410A.** A fiber coating apparatus **408A** and curing apparatus **408B** for applying and curing the primary polymer coating may also be provided. Furthermore, additional coating and curing apparatus may be provided for applying and curing a secondary polymer coating (not shown). Tensioning apparatus **470** are preferably provided for applying the desired draw tension to the fiber after it is coated. Finally, a spool winding apparatus **471** and reciprocating guide **469** may be provided for winding the heat treated and coated optical fiber onto a winding spool **473,** such as a shipping or bulk spool. Additionally, an iris or moveable door mechanism **472** may be employed at the bottom of the treatment furnace **450** to minimize the amount of air entry into it from the exit.

In operation, the method in accordance with embodiments of the invention comprises the steps of drawing the optical fiber **410** from a heated glass supply, such as an optical fiber preform **402** (preferably including a germania-doped central core region and a substantially pure silica cladding region -corresponding to, and forming when drawn, an optical fiber having a germania-doped central core and a cladding of substantially pure silica), at a draw rate of greater than or equal to 10 m/s, followed by heat treating the optical fiber by maintaining the optical fiber in a heated treatment zone **412** for a residence time (preferably greater than 0.07 and less than 0.25 seconds) while subjecting the optical fiber **410** to an average cooling rate in the heated treatment zone **412** of greater than 1,200 °C/s and less than 5,000 °C/s; more preferably greater than 2,000 °C/s and less than 5,000 °C/s, and in some embodiments, greater than 2,000 °C/s and less than 3,500 °C/s. The average cooling rate is preferably greater than 2,000 °C/s and less than 5,000 °C/s, for example, when the draw speed is greater than or equal to 20 m/s. The average cooling rate in the heated treatment zone **412** is defined as the fiber surface temperature at the entry point **"A"** (the fiber entry surface temperature) of the fiber minus the fiber's surface temperature at an exit point **"B"** (the fiber exit surface temperature) of the fiber divided by the total residence time of the fiber in the treatment zone.

The method in accordance with embodiments of the invention is particularly well suited for reducing the attenuation due to Rayleigh scattering of an optical fiber **410,** such as the standard step index single mode fiber shown in **Fig. 9****.** The method is particularly well suited for manufacturing an optical fiber having a central core **414** at the fiber's centerline including a germanium dopant and a cladding **415** including substantially pure silica (with no appreciable refractive index altering dopants). As used herein, the term "central core" refers to the portion of the fiber where the majority of the light is confined when in operation, which is at the center part of the fiber, and which has a higher refractive index portion as compared to an outermost glass cladding portion. The cladding **415** is that part of the fiber **410** that surrounds and abuts the central core and which extends to the outside diameter of the glass portion of the fiber (to a diameter of about 125 microns) and which has a lower refractive index than the central core **414.** As should be recognized, the heated glass source preform **402** also includes a core region **414A** and a cladding region **415A** (shown partially cut away in **Fig. 11****)** whose physical proportions and composition roughly corresponds to the central core **414** and cladding **415** of the fiber drawn therefrom. In other words, the core region **414A** is doped with at least germanium and the cladding region **415A** is formed of substantially pure silica.

The method in accordance with embodiments of the invention will be further described with reference to **Figs. 10** and **11****.** **Fig. 10** illustrates one preferred cooling profile for forming the heat treated optical fiber **410A** in accordance with the invention. Preferably, after being drawn from the heated glass supply preform **402** (having a root portion heated to about 1800-2200 °C), the drawn fiber **410** enters into the treatment furnace **450** at time equals 0.0 seconds such that the fiber **410** has a fiber entry surface temperature preferably between an upper temperature **411A** of 1700 °C and a lower temperature **411B** of 1,200 °C at the point of entry into the treatment zone **412** of the furnace (designated **"A"**); more preferably between 1,550 °C and 1,700 °C; and in some embodiments greater than 1600 °C. The fiber **410** is then heated and slow cooled in the treatment zone **412** and spends a sufficient total residence time **tr** in the treatment zone **412** (between 0.07 and 0.25 seconds) such that partial fiber annealing (slowed but non-equilibrium reordering of the glass on an atomic scale) takes place. The surface temperature of the fiber at the exit (designated **"B"**) from the heat treatment zone is between an upper temperature **413A** of 1,450 °C and a lower temperature **413B** of 1,250 °C. Annealing in accordance with the invention herein reduces the Rayleigh back scattering loss and, therefore, reduces the attenuation of the treated optical fiber **410A** at the wavelengths of interest (e.g., 1310 nm and 1550 nm) as compared to untreated fiber.

As is shown in **Fig. 11****,** the draw furnace **420** and treatment furnace **450** are preferably configured to form a continuously enclosed path for the optical fiber as it passes between the drawing and heat treating steps. For example, the treatment furnace **450** may mount directly to a lower flange **420B** of the draw furnace **420** or attach to an interconnection member **420C** such as tube shown. The fiber is disposed in an inert atmosphere and is free from air exposure while it passes between the draw furnace **420** and the treatment furnace **450.** This advantageously minimizes air exposure to the graphite muffle tube **432** of the draw furnace **420** that may cause degradation thereof.

As shown in **Fig. 8****,** during the steps of drawing **403** and heat treating **405,** an atmosphere preferably containing an inert gas is provided. The inert gas may be helium, nitrogen, argon, or mixture thereof. Preferably, the inert gas (preferably a helium gas) is supplied at draw furnace inlet **420A** at the top of the draw furnace. The inert gas travels alongside of the glass supply preform **402** and exits the draw furnace **420** at a lower end thereof along with the fiber **410.** The gas then travels along with the fiber (but generally at a different rate) through the passage **413** of the treatment furnace **450** and exits through a lower end (at point "B") of the treatment furnace. The flow rate of the inert treatment gas (preferably helium) through the passage **413** of the heated treatment zone **412** of the treatment furnace **415** during the step of heat treating is preferably greater than 10 liters/minute, and most preferably between 10 and 50 liters/minute.

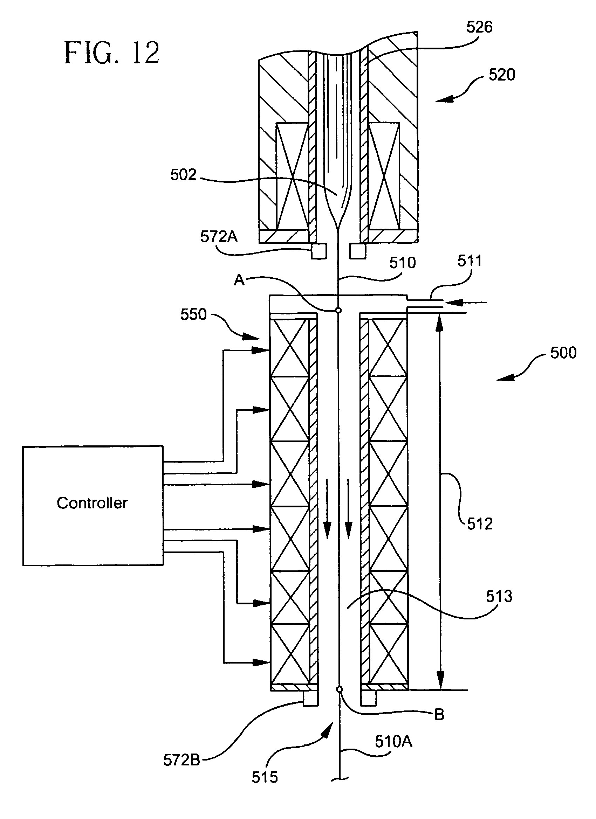

Optionally, the draw furnace **520** may be configured such that it is separated from, i.e., the exit end of the draw furnace is not directly connected to the entrance end of the heat treatment furnace **550,** as shown in partial view of **Fig. 12****.** In this configuration, the gas atmosphere disposed in the treatment furnace **550** may contain a different gas than in the draw furnace. For example, an atmosphere containing argon only, or mixture of both helium and argon, may be provided inside the passage **513** during the step of heat treating such that the fiber is disposed in an inert atmosphere. Preferably, for example, a draw gas, such as helium, is provided to flow through the draw furnace **520** during the step of drawing, while a treatment gas (such as substantially pure nitrogen, pure argon, or a mixture of substantially pure argon and substantially pure helium) is provided to the treatment furnace **550** during the step of heat treating. For example, as shown in **Fig. 12****,** the treatment gas in the treatment furnace **550** may be provided at input port **511** and extracted at the bottom of the treatment furnace at **515.** The flow rate of the inert treatment gas through the passage **513** of the heated treatment zone **512** of the treatment furnace **550** during the step of heat treating is preferably greater than 10 liters/minute, and most preferably between 10 and 50 liters/minute. The additional process components (e.g., additional measurement, cooler apparatus, coating/curing apparatus, and winding apparatus) are not shown for clarity in **Fig. 12****.**

In a preferred embodiment of **Fig. 11****,** the optical fiber **410** is drawn through the heated treatment zone **412** at a draw rate of greater than or equal to 10 m/s; more preferably greater than or equal to 15 m/s; and in some embodiments, greater than or equal to 20 m/s. Preferably, the fiber **410** is a single mode step index fiber such as is shown in **Fig. 9** having a germanium dopant in the central core **414** and a substantially pure silica cladding **415.** However, it should be recognized that the method described herein is equally useful and adapted for treating any optical fiber having a germanium-doped central core. Preferably, the germanium is present in the core in a sufficient amount to provide a relative refractive index percent of at least 0.3% as compared to the cladding. The fiber **410** is preferably drawn by heating the preform **402** to a flowing consistency (1800-2200°C) at its draw root and applying a draw tension to the coated optical fiber by using a tensioning apparatus **470** set to provide a tension of between about 25 grams to about 200 grams; more preferably between about 60 and 170 grams; and most preferably about 90-150 grams. Drawing at high speed and tension enables production of large volumes of the optical fiber which is then heat treated in accordance with aspects of the present invention to further minimize the attenuation of the produced fiber as compared to untreated fiber.

The drawn fiber **410** is maintained in the heated treatment zone **412** for a total residence time of greater than 0.07 seconds and less than 0.25 seconds; more preferably greater than 0.07 and less than 0.15 seconds; and in some embodiments less than 0.1 seconds. Following treatment, the fiber then exits the zone **412** at the exit to the treatment zone **412** (point "B"). The average cooling rate for the fiber **410** while passing through the treatment zone **412** is preferably greater than 1,200 °C/s and less than 5,000 °C/s; more preferably greater than 2,000 °C/s and less than 5,000 °C/s; and in some embodiments, greater than 2,200 °C/s and less than 3,500 °C/s. During the treatment step, the walls **414** of furnace's treatment zone **412** are heated and maintained at an appropriate temperature to provide a passage temperature (at the center of the passage **413** where the fiber travels) in at least a portion of the heated treatment zone **412** of greater than 1,300 °C; more preferably between 1,400 and 1,600 °C. The heat treating step is accomplished by one or more heaters, which may be resistance-type heaters, for example.

In a preferred embodiment, the treatment furnace **450** includes a plurality of individual heaters **(c-h)** spaced along the axial length of the treatment furnace **450.** Each of the heaters encircles the fiber, and each is preferably individually controlled by a controller **417.** During the step of heat treating, the fiber is subjected to heat from multiple heating zones; at least one of the heating zones (each zone roughly corresponding to the physical size of the heaters **(c-h))** of the multiple heating zones is set to different temperature as compared to another of the multiple heating zones. Preferably, the temperature of the wall **414** of each heater is controlled by a controller **417** such that at least one of the heating zones **c-h** has a passage temperature of between 1,400 °C and 1,600 °C. In a preferred mode of operation, a first zone (example **c**) closer to the draw furnace **420** is controlled to have a passage temperature at its center (at point " **c**"') of between 1,100 °C and 1,300 °C, while a second zone (example **h**) further away from the draw furnace is controlled to have a passage temperature (at point" **h**' ") of between 1,400 °C and 1,500 °C. The actual wall temperatures will be set such that the desired fiber exit surface temperature condition is achieved to provide the desired cooling rate. If the gas used is other than helium, for example, the wall temperature would be set to a lower temperature because the thermal conductivity of Argon and mixtures of Agron and Helium would have a lower coefficient of thermal conductivity and, therefore, more of a temperature difference is required between the furnace's passage temperature and the fiber temperature to achieve the same cooling rate.

In accordance with embodiments of the invention, it is preferable to configure and locate the treatment furnace **450** to provide an fiber entry surface temperature of the optical fiber, as it enters the treatment zone **412** of between 1,200 °C and 1,700 °C at point **"A";** more preferably between 1,550 °C and 1,700 °C; and in some embodiments, greater than 1,600 °C. Preferably also, it is desired to configure the length and operating temperature of the treatment furnace **450** to provide an exit temperature of the optical fiber **410A** at an exit of the treatment zone **412** at point **"B"** of between 1,250 °C and 1,450 °C; more preferably between 1,300 °C and 1,450 °C; and most preferably between 1,325 °C and 1,425 °C.

According to one embodiment illustrated in **Fig. 11****,** it is desirable to provide an entry temperature of the optical fiber **410** as the fiber enters the treatment zone **450** (at "**A**") of between 1,550 °C and 1,700 °C; more preferably between 1,600 °C and 1,700 °C, and provide an exit temperature of the heat treated optical fiber **410A** as the treated fiber exits the treatment zone **412** (at **"B"**) of between 1,300 °C and 1,450 °C, and more preferably between 1,325 °C and 1,425 °C.

The muffle tube **416** of the treatment furnace **450** can be preferably manufactured from a substantially pure silica quartz glass, ceramic and/or carbon materials. The heating elements of the treatment furnace are preferably molydisilicide high temperature heating elements available from Kanthal. The inner diameter of the tube **416** is preferably about 60 mm. The construction of the heating furnace of **Fig. 12** is such that it has the same components as described for **Fig. 11****.**

As shown in **Fig. 12****,** fiber **510** is drawn from and heat treated by apparatus **500.** The fiber **510** is drawn from the heated glass supply **502** at a draw speed of greater than 10 m/s and at a draw tension between 25 and 200 grams. A helium atmosphere is provided in the draw furnace **520.** An air entry preventer **572** such as a gas shield, moveable iris, or door mechanism is preferably employed at the lower end of the draw furnace to minimize intrusion of air that may into the furnace chamber that may cause degradation of the graphite muffle tube **526.** A multi-element heat treatment furnace **550** is provided downstream from the draw furnace **520.** The structure is identical to that described with respect to **Fig. 11****,** except that it is physically separated from the draw furnace **520** by a space where the fiber passes through air. Preferably, the cooling profile in the heated treatment zone **512** of the heat treating furnace **550** is arranged and configured the same as taught in **Fig. 10** such that the total residence time in the zone is between 0.07 and 0.25 seconds, and the average cooling rate in the zone **512** is preferably greater than 1,200 °C/s and less than 5,000 °C/s; more preferably greater than 2,200 °C/s and less than 3,500 °C/s. Likewise, the heat treatment furnace **550** is configured and positioned such that the fiber entry surface temperature at point A is between 1,400°C and 1700°C (between 1,550 °C and 1,700 °C for draw speeds greater than or equal to 15 m/s) and an fiber exit surface temperature of the heat treated optical fiber **510A** as the treated fiber exits the treatment zone **512** (at point "**B**") of between 1,325 °C and 1,425 °C.

### Examples

Table 2 below illustrates the results for various experimental examples (13-18) of fiber actually produced using the treatment apparatus of **Fig. 11**.

**Table 2**

| **Ex.** | **Gas** | **Draw Rate** (m/s) | **Draw Tens.** (gram) | **Entry Temp.** (°C) | **Exit Temp.** (°C) | **Avg. Cool. Rate** (°C/s) | **tr** (s) | **Zone L** (m) | **Attn.** @ 1310 dB/km | **Attn.** @1550 dB/km |
|---|---|---|---|---|---|---|---|---|---|---|
| 13 | He | 10 | 100 | 1,440 | 1,270 | 1,430 | 0.119 | 1.19 | 0.327 | 0.186 |
| 14 | He | 15 | 100 | 1,560 | 1,370 | 1,610 | 0.118 | 1.77 | 0.322 | 0.185 |
| 15 | He | 15 | 100 | 1,560 | 1,270 | 3,670 | 0.079 | 1.19 | 0.326 | 0.185 |
| 16 | He | 15 | 100 | 1,560 | 1,360 | 2,530 | 0.079 | 1.19 | 0.326 | 0.184 |
| 17 | He | 24 | 100 | 1,690 | 1,360 | 4,460 | 0.074 | 1.77 | 0.325 | 0.187 |
| 18 | He | 24 | 100 | 1,690 | 1,380 | 4,190 | 0.074 | 1.77 | 0.325 | 0.186 |

### Example 13

**Fig. 11** shows the apparatus **400** used for producing the treated fiber **410A** of Example 13, except that the treatment furnace in this example included only two heater elements. From the preform **402,** a single mode step index fiber was drawn having a core of germanium-doped silica and a cladding of substantially pure silica. The fiber was drawn at a draw tension of 100 grams. The refractive index profile of the fiber is shown in **Fig. 9** and the profile core delta and radius is selected to provide a total dispersion of the fiber between 16 and 22 ps/nm/km at 1550 nm. The heat treatment furnace **450** is coupled directly to the draw furnace **420** and provides and enclosed pathway for the flow of about 23 liters/minute of substantially pure helium treatment gas from the inlet **420A** around the preform **402,** through the passageway **413,** and exiting at point **B.** The temperatures of the two heater elements were set to 1,250 °C. The treatment zone **412** of the furnace **450** was 1.19m long and the muffle tube **416** of the treatment furnace **450** was pure quartz having an inner diameter of 60 mm. The optical fiber **410** was drawn at a draw rate of 10 m/s and passed through the treatment furnace **450** such that the total residence time was 0.119 seconds in the zone **412.** The fiber's entry surface temperature was 1440 °C and the fiber's exit surface temperature was 1,270 °C. Accordingly, the average cooling rate in the treatment zone **412** was 1,430 °C/s. The attenuation of the fiber produced in accordance with the method was measured to be 0.327 dB/km at 1310 nm, and 0.186 dB/km at 1550 nm.

### Example 14

Again, **Fig. 11** shows the apparatus 400 used for producing the treated fiber **410A** of Example 14. In this example, the heating elements **c-d, e-f,** and **g-h** were wired together in pairs such that the combined elements **c-d,** for example, act as a single heater element. Likewise, **e-f** and **g-h** are also wired together, thereby producing three independently controllable heating elements. From the preform **402,** a single mode step index fiber was drawn having a core of germanium-doped silica and a cladding of substantially pure silica. The fiber was drawn at a draw tension of 100 grams. The refractive index profile of the fiber is shown in **Fig. 9** and was selected to provide a total dispersion of the fiber between 16 and 22 ps/nm/km at 1550 nm. The heat treatment furnace **450** is coupled directly to the draw furnace **420** and thereby forms an enclosed pathway for the flow of about 23 liters/minute of substantially pure helium treatment gas from the inlet **420A** around the preform **402,** through the passageway **413,** and exiting at point **B.** The temperature of the heater elements **c-d, e-f,** and **g-h** were set to 1,250 °C, 1,450 °C, and 1,450 °C, respectively. The treatment zone **412** of the furnace **450** was 1.77 m long and the muffle tube **416** of the treatment furnace **450** was pure quartz tube having an inner diameter of 60 mm. The optical fiber **410** was drawn at a draw speed of 15 m/s and passed through the treatment furnace **450** such that the total residence time was 0.118 seconds in the zone **412.** The fiber's entry surface temperature was 1,560 °C and the fiber's exit surface temperature was 1,370 °C. Accordingly, the average cooling rate in the treatment zone **412** was 1,610 °C/s. The attenuation of the fiber produced for Example 14 was measured to be 0.322 dB/km at 1310 nm, and 0.185 dB/km at 1550 nm.

### Example 15

The configuration of the apparatus of Example 3 was the same as described for Example 13 (having only two heater elements). From the preform **402,** a single mode step index fiber was drawn having a core of germanium-doped silica and a cladding of substantially pure silica. The fiber was drawn at a draw tension of 100 grams. The refractive index profile of the fiber is shown in **Fig. 9** and its core delta and radius was selected to provide a total dispersion of the fiber between 16 and 22 ps/nm/km at 1550 nm. The heat treatment furnace **450** is coupled directly to the draw furnace **420** and forms an enclosed pathway for the flow of about 23 liters/minute of substantially pure helium treatment gas from the inlet **420A** around the preform **402,** through the passageway **413,** and exiting at point **B.** The temperatures of the two heater elements were set to 1,150 °C. The treatment zone **412** of the furnace **450** was 1.19 m long and the muffle tube **416** of the treatment furnace **450** was pure quartz having an inner diameter of 60 mm. The optical fiber **410** was drawn at a draw rate of 15 m/s and passed through the treatment furnace **450** such that the total residence time was 0.079 seconds in the zone **412.** The fiber's entry surface temperature was 1,560 °C and the fiber's exit surface temperature was 1,270 °C. Accordingly, the average cooling rate in the treatment zone **412** was 3,670 °C/s. The attenuation of the fiber produced in accordance with the method was measured to be 0.326 dB/km at 1310 nm and 0.185 dB/km at 1550 nm.

### Example 16

**Fig. 11** shows the apparatus **400** used for producing the treated fiber **410A** of Example 16. The configuration of the heating elements was the same as described for Examples 13 and 15. From the preform **402,** a single mode step index fiber was drawn having a core of germanium-doped silica and a cladding of substantially pure silica. The fiber was drawn at a draw tension of 100 grams. The refractive index profile of the fiber is shown in **Fig. 9** was selected to provide a total dispersion of the fiber between 16 and 22 ps/nm/km at 1550 nm. The heat treatment furnace **450** is coupled directly to the draw furnace **420** and forms an enclosed pathway for the flow of about 23 liters/minute of substantially pure helium treatment gas from the inlet **420A** around the preform **402,** through the passageway **413,** and exiting at point **B.** The temperature of the two heater elements employed were set to 1,300 °C. The treatment zone **412** of the furnace **450** was 1.19 m long and the muffle tube **416** of the treatment furnace **450** was pure quartz having an inner diameter of 60 mm. The optical fiber **410** was drawn at a rate of 15 m/s and passed through the treatment furnace **450** such that the total residence time was 0.079 seconds in the zone **412.** The fiber's entry surface temperature was 1,560 °C and the fiber's exit surface temperature was 1,360 °C. Accordingly, the average cooling rate in the treatment zone **412** was 2,530 °C/s. The attenuation of the fiber was measured to be 0.326 dB/km at 1310 nm, and 0.184 dB/km at 1550 nm.

### Example 17

The apparatus used for producing the treated fiber of Example 17 is the same as described in Example 14. From the preform, a single mode step index fiber was drawn having a core of germanium-doped silica and a cladding of substantially pure silica. The fiber was drawn at a draw tension of 100 grams. The refractive index profile of the fiber is shown in **Fig. 9** was selected to provide a total dispersion of the fiber between 16 and 22 ps/nm/km at 1550 nm. The heat treatment furnace **450** is coupled directly to the draw furnace **420** and provides and enclosed pathway for the flow of about 23 liters/minute of substantially pure helium treatment gas from the inlet **420A** around the preform **402,** through the passageway **413,** and exiting at point **B.** The temperature of the heater elements **c-d, e-f,** and **g-h** were set to 1,150 °C, 1,150 °C and 1,450 °C, respectively. The treatment zone **412** of the furnace **450** was 1.77 m long and the muffle tube **416** of the treatment furnace **450** was pure quartz having an inner diameter of 60 mm. The optical fiber 410 was drawn at a draw rate of 24 m/s and passed through the treatment furnace **450** such that the total residence time was 0.074 seconds in the zone **412.** The fiber's entry surface temperature was 1,690 °C and the fiber's exit surface temperature was 1,360 °C. Accordingly, the average cooling rate in the treatment zone **412** was 4,460 °C/s. The attenuation of the fiber produced in accordance with the method was measured to be 0.325 dB/km at 1310 nm and 0.187 dB/km at 1550 nm.

### Example 18

The apparatus used for producing the treated fiber of Example 18 is the same as described in Examples 14 and 17. From the preform **402,** a single mode step index fiber was drawn having a core of germanium-doped silica and a cladding of substantially pure silica. The fiber was drawn at a draw tension of 100 grams. The refractive index profile of the fiber is shown in **Fig. 9** was selected to provide a total dispersion of the fiber between 16 and 22 ps/nm/km at 1550 nm. The heat treatment furnace **450** is coupled directly to the draw furnace **420** and provides and enclosed pathway for the flow of about 23 liters/minute of substantially pure helium treatment gas from the inlet **420A** around the preform **402,** through the passageway **413,** and exiting at point **B.** The temperature of the heater elements **c-d, e-f,** and **g-h** were set to 1,150 °C, 1,150°C and 1,550 °C, respectively. The treatment zone **412** of the furnace **450** was 1.77 m long and the muffle tube **416** of the treatment furnace **450** was pure quartz having an inner diameter of 60 mm. The optical fiber **410** was drawn at 24 m/s and passed through the treatment furnace **450** such that the total residence time was 0.074 seconds in the zone **412.** The fiber's entry surface temperature was 1,690 °C and the fiber's exit surface temperature was 1,380 °C. Accordingly, the average cooling rate in the treatment zone **412** was 4,190 °C/s. The attenuation of the fiber was measured to be 0.325 dB/km at 1310 nm and 0.186 dB/km at 1550 nm.

**Table 3** below illustrates the calculated results for various theoretical examples (Examples 19-22) using the treatment apparatus of **Fig. 11****.**

**Table 3**

| **Ex.** | **Gas** | **Draw Rate** (m/s) | **Draw Tens.** (gram) | **Entry Temp.** (°C) | **Exit Temp.** (°C) | **Avg. Cool. Rate** (°C/s) | **tr** (s) | **Zone L** (m) | **Attn.** @ 1310 dB/km | **Attn.** @ 1550 dB/km |
|---|---|---|---|---|---|---|---|---|---|---|
| 19 | He | 10 | 100 | 1,650 | 1,350 | 1,500 | 0.200 | 2.0 | 0.316 | 0.183 |
| 20 | He | 15 | 100 | 1,650 | 1,370 | 2,110 | 0.133 | 2.0 | 0.318 | 0.184 |
| 21 | He | 20 | 100 | 1,650 | 1,380 | 2,700 | 0.100 | 2.0 | 0.320 | 0.185 |
| 22 | He | 24 | 100 | 1,650 | 1,390 | 3,130 | 0.083 | 2.0 | 0.320 | 0.185 |

In the theoretical examples provided in **Table 3,** it should be recognized that for high speed treatment of fibers having germania-doped central core and substantially pure silica cladding as shown in **Fig. 9****,** the desired cooling rate is preferably greater than 1,200 °C/s; and more preferably greater than 1,200 °C/s and less than 5,000 °C/s. Preferably, the total residence time in the heated treatment zone is between 0.07 and 0.25 seconds; and more preferably between 0.07 and 0.15 seconds.

## Claims

1. A method of manufacturing optical fiber, comprising the step of:
drawing the optical fiber (110, 210, 410) from a heated glass source (102, 202, 402) at a draw rate of greater than or equal to 10 m/s,
**characterized by** the step of
heat treating the optical fiber by maintaining the optical fiber in a heated treatment zone (150, 250, 450) for a total residence time greater than 0.07 seconds and less than 0.25 seconds while subjecting the optical fiber to an average cooling rate in the treatment zone, defined as a fiber entry surface temperature minus a fiber exit surface temperature divided by the total residence time of the optical fiber in the treatment zone, of greater than 1,200 °C/s and less than 5,000 °C/s.

2. A method of manufacturing an optical fiber according to claim 1 further comprising a step of exposing the optical fiber during the step of heat treating to a furnace temperature in at least a part of the heated treatment zone (150, 250, 450) of greater than 1,300 °C.

3. A method of manufacturing an optical fiber according to claim 2 further comprising a step of subjecting the fiber to multiple heating zones (450c-h) during the step of heat treating, at least one heating zone of the multiple heating zones being set to different temperature as compared to another of the multiple heating zones.

4. A method of manufacturing an optical fiber according to claim 3 further comprising a step of controlling the at least one heating zone of the multiple heating zones (450c-h) to have a temperature of between 1,400 °C and 1,600 °C.

5. A method of manufacturing an optical fiber according to claim 3 further comprising a step of controlling a first zone closer to the draw furnace to have a temperature between 1,100 °C and 1,300 °C and a second zone further downstream from the draw furnace to a temperature between 1,400 °C and 1,500 °C.

6. A method of manufacturing an optical fiber according to claim 2 further comprising a step of forming a continuously enclosed path for the optical fiber as it passes between the drawing and heat treatment steps such that the fiber is free from air exposure.

7. A method of manufacturing an optical fiber according to claim 1 further comprising the step of flowing, during the step of heat treating, an inert gas (PG) through the heated treatment zone having a flow rate between 10 and 50 liters/minute.

8. A method of manufacturing an optical fiber according to claim 1 further comprising a step of providing the fiber entry surface temperature of the optical fiber as it enters the treatment zone to be between 1,200 °C and 1,700 °C.

9. A method of manufacturing an optical fiber according to claim 1 further comprising the step of providing the fiber entry surface temperature of the optical fiber to be greater than 1,600 °C.

10. A method of manufacturing an optical fiber according to claim 1 further comprising the step of providing the fiber exit surface temperature of the optical fiber at an exit of the treatment zone to be between 1,250 °C and 1,450 °C.

11. A method of manufacturing an optical fiber according to claim 1 further comprising steps of:
providing the fiber entry surface temperature as the fiber enters the treatment zone to be between 1,550 °C and 1,700 °C, and
providing the fiber exit surface temperature of the optical fiber as the fiber exits the treatment zone to be between 1,325 °C and 1,425 °C.

12. A method of manufacturing an optical fiber according to claim 1 wherein the draw speed is greater than or equal to 15 m/s.

13. The method according to claim 1 wherein the fiber is drawn at a draw tension from about 25 grams to about 200 grams.

14. The method according to claim 1 wherein the heated glass source is an optical fiber preform including a germanium-doped central core region and a substantially pure silica cladding region, the draw rate is greater than or equal to 20 m/s, and the average cooling rate of the optical fiber in the heated treatment zone is greater than 2,000 °C/s and less than 5,000 °C/s.

## Patentansprüche

1. Verfahren zum Herstellen einer optischen Faser, umfassend den folgenden Schritt:
Ziehen der optischen Faser (110, 210, 410) aus einer erwärmten Glasquelle (102, 202, 402) mit einer Ziehgeschwindigkeit von größer als oder gleich 10 m/s, **gekennzeichnet durch** den folgenden Schritt:
Wärmebehandeln der optischen Faser **durch** Halten der optischen Faser in einer erwärmten Behandlungszone (150, 250, 450) für eine Gesamtverweilzeit größer als 0,07 Sekunden und weniger als 0,25 Sekunden, während die optische Faser in der Behandlungszone einer durchschnittlichen Abkühlgeschwindigkeit von größer als 1200 °C/s und weniger als 5000°C/s unterworfen wird, wobei die durchschnittliche Abkühlgeschwindigkeit definiert ist als eine Eintrittsfaserflächentemperatur minus einer Austrittsfaserflächentemperatur geteilt **durch** die Gesamtverweilzeit der optischen Faser in der Behandlungszone.

2. Verfahren zum Herstellen einer optischen Faser nach Anspruch 1, weiterhin umfassend einen Schritt in welchem die optischen Faser während des Schritts des Wärmebehandelns einer Ofentemperatur in mindestens einem Teil der erwärmten Behandlungszone (150, 250, 450) von größer als 1300°C ausgesetzt wird.

3. Verfahren zum Herstellen einer optischen Faser nach Anspruch 2, weiterhin umfassend einen Schritt in welchem die Faser mehreren Heizzonen (450 c-h) während des Schritts des Wärmebehandelns ausgesetzt wird , wobei mindestens eine Heizzone der mehreren Heizzonen auf eine unterschiedliche Temperatur eingestellt ist im Vergleich zu einer anderen der mehreren Heizzonen.

4. Verfahren zum Herstellen einer optischen Faser nach Anspruch 3, weiterhin umfassend einen Schritt des Steuerns der mindestens einen Heizzone der mehreren Heizzonen (450 c-h) derart, dass sie eine Temperatur von zwischen 1400°C und 1600°C aufweist.

5. Verfahren zum Herstellen einer optischen Faser nach Anspruch 3, weiterhin umfassend einen Schritt des Steuerns einer ersten Zone, die näher am Ziehofen gelegen ist, derart, dass sie eine Temperatur zwischen 1100°C und 1300°C aufweist, und einer zweiten Zone, die weiter stromabwärts von dem Ziehofen gelegen ist, auf eine Temperatur zwischen 1400°C und 1500°C.

6. Verfahren zum Herstellen einer optischen Faser nach Anspruch 2, weiterhin umfassend einen Schritt des Ausbildens eines durchgängig umschlossenen Pfades für die optische Faser, während diese zwischen den Zieh- und Wärmebehandlungsschritten durchläuft, derart, dass die Faser frei von Lufteinwirkung ist.

7. Verfahren zum Herstellen einer optischen Faser nach Anspruch 1, weiterhin umfassend den Schritt des Durchströmens während des Schritts des Wärmebehandeins eines Inertgases (PG) durch die erwärmte Behandlungszone mit einer Strömungsgeschwindigkeit zwischen 10 und 50 Litern/Minute.

8. Verfahren zum Herstellen einer optischen Faser nach Anspruch 1, weiterhin umfassend einen Schritt des Bereitstellens der Eintrittsfaserflächentemperatur der optischen Faser, wenn diese in die Behandlungszone eintritt, derart, dass sie zwischen 1200°C und 1700°C beträgt.

9. Verfahren zum Herstellen einer optischen Faser nach Anspruch 1, weiterhin umfassend den Schritt des Bereitstellens der Eintrittsfaserflächentemperatur der optischen Faser derart, dass sie größer als 1600°C ist.

10. Verfahren zum Herstellen einer optischen Faser nach Anspruch 1, weiterhin umfassend den Schritt des Bereitstellens der Austrittsfaserflächentemperatur der optischen Faser an einem Ausgang der Behandlungszone derart, dass sie zwischen 1250°C und 1450°C beträgt.

11. Verfahren zum Herstellen einer optischen Faser nach Anspruch 1, weiterhin umfassend die folgenden Schritte:
Bereitstellen der Eintrittsfaserflächentemperatur, wenn die Faser in die Behandlungszone eintritt, derart, dass sie zwischen 1550°C und 1700°C beträgt, und
Bereitstellen der Austrittsfaserflächentemperatur der optischen Faser, wenn die Faser die Behandlungszone verlässt, derart, dass sie zwischen 1325°C und 1425°C beträgt.

12. Verfahren zum Herstellen einer optischen Faser nach Anspruch 1, wobei die Ziehgeschwindigkeit größer als oder gleich 15 m/s ist.

13. Verfahren nach Anspruch 1, wobei die Faser mit einer Ziehspannung von ungefähr 25 g bis ungefähr 200 g gezogen wird.

14. Verfahren nach Anspruch 1, wobei die erwärmte Glasquelle ein Preform für optische Fasern ist, das einen germaniumdotierten Mittelkernbereich und einen im Wesentlichen reinen Quarzglasmantelbereich aufweist, die Ziehgeschwindigkeit größer als oder gleich 20 m/s ist und die durchschnittliche Abkühlgeschwindigkeit der optischen Faser in der erwärmten Behandlungszone größer als 2000°C/s und weniger als 5000°C/s ist.

## Revendications

1. Procédé de fabrication d'une fibre optique, comprenant l'étape consistant à :
tirer la fibre optique (110, 210, 410) d'une source de verre chauffé (102, 202, 402) à une vitesse de tirage supérieure ou égale à 10 m/s, **caractérisée par** l'étape consistant à :
traiter thermiquement la fibre optique en maintenant la fibre optique dans une zone de traitement chauffée (150, 250, 450) pendant un temps de séjour total supérieur à 0,07 seconde et inférieur à 0,25 seconde tout en soumettant la fibre optique à une vitesse de refroidissement moyenne dans la zone de traitement, définie comme une température de surface d'entrée de fibre moins une température de surface de sortie de fibre divisée par le temps de séjour total de la fibre optique dans la zone de traitement, supérieure à 1200 °C/s et inférieure à 5000 °C/s.

2. Procédé de fabrication d'une fibre optique selon la revendication 1, comprenant en outre une étape d'exposition de la fibre optique pendant l'étape de traitement thermique à une température de four dans au moins une partie de la zone de traitement chauffée (150, 250, 450) de plus de 1300 °C.

3. Procédé de fabrication d'une fibre optique selon la revendication 2, comprenant en outre une étape consistant à soumettre la fibre à de multiples zones de chauffage (450c-h) pendant l'étape de traitement thermique, au moins une zone de chauffage des multiples zones de chauffage étant réglée à une température différente en comparaison d'une autre des multiples zones de chauffage.

4. Procédé de fabrication d'une fibre optique selon la revendication 3, comprenant en outre une étape de commande de la au moins une zone de chauffage des multiples zones de chauffage (450 c-h) pour qu'elle ait une température de 1400 °C à 1600 °C.

5. Procédé de fabrication d'une fibre optique selon la revendication 3, comprenant en outre une étape de commande d'une première zone plus proche du four de tirage pour qu'elle ait une température de 1100 °C à 1300°C et une seconde zone plus en aval du four de tirage à une température de 1400 °C à 1500°C.

6. Procédé de fabrication d'une fibre optique selon la revendication 2, comprenant en outre une étape de formation d'un trajet enserré en continu pour la fibre optique lorsqu'elle passe entre les étapes de tirage et de traitement thermique de sorte que la fibre ne soit pas exposée à l'air.

7. Procédé de fabrication d'une fibre optique selon la revendication 1, comprenant en outre l'étape d'écoulement, pendant l'étape de traitement thermique, d'un gaz inerte (DG) à travers la zone de traitement chauffée ayant un débit de 10 à 50 litres/minute.

8. Procédé de fabrication d'une fibre optique selon la revendication 1, comprenant en outre une étape consistant à mettre en oeuvre une température de surface d'entrée de la fibre optique, lorsqu'elle entre dans la zone de traitement, de 1200 C à 1700 °C.

9. Procédé de fabrication d'une fibre optique selon la revendication 1, comprenant en outre l'étape consistant à mettre en oeuvre une température de surface d'entrée de la fibre optique supérieure à 1600 °C.

10. Procédé de fabrication d'une fibre optique selon la revendication 1, comprenant en outre l'étape consistant à mettre en oeuvre une température de surface de sortie de la zone de traitement de 1250 C à 1450 °C.

11. Procédé de fabrication d'une fibre optique selon la revendication 1, comprenant en outre les étapes consistant à :
mettre en oeuvre une température de surface d'entrée de la fibre optique lorsque la fibre pénètre dans la zone de traitement de 1550 °C à 1700 °C, et
mettre en oeuvre une température de surface de sortie de la fibre optique, lorsque la fibre sort de la zone de traitement, de 1325 °C à 1425 °C.

12. Procédé de fabrication d'une fibre optique selon la revendication 1, dans lequel la vitesse de tirage est supérieure ou égale à 15 m/s.

13. Procédé selon la revendication 1, dans lequel la fibre est tirée à une traction de tirage d'environ 25 grammes à environ 200 grammes.

14. Procédé selon la revendication 1, dans lequel la source de verre chauffé est une préforme de fibre optique comprenant une région de noyau central dopée au germanium et une région de gainage de silice sensiblement pure, la vitesse de tirage est supérieure ou égale à 20 m/s, et le taux de refroidissement moyen de la fibre optique dans la zone de traitement chauffée est supérieur à 2000 °C/s et inférieur à 5000 °C/s.
